Europäisches Patentamt

European Patent Office

Office européen des brevets

(19)

(11) Veröffentlichungsnummer: **0 114 350**
**B1**

# (12) EUROPÄISCHE PATENTSCHRIFT

(45) Veröffentlichungstag der Patentschrift:
02.07.86

(21) Anmeldenummer: 83112858.2

(22) Anmeldetag: 21.12.83

(51) Int. Cl.⁴: **G 03 B 42/04**

(54) **Vorrichtung zum Entnehmen von Filmen, insbesondere Röntgenfilmen aus einem Magazin.**

(30) Priorität: 29.12.82 DE 3248458

(43) Veröffentlichungstag der Anmeldung:
01.08.84 Patentblatt 84/31

(45) Bekanntmachung des Hinweises auf die Patenterteilung:
02.07.86 Patentblatt 86/27

(84) Benannte Vertragsstaaten:
FR GB IT

(56) Entgegenhaltungen:
FR-A-1 571 232
GB-A-2 099 795
US-A-3 265 383
US-A-3 980 295
US-A-4 195 832

(73) Patentinhaber: AGFA- GEVAERT Aktiengesellschaft,
D-5090 Leverkusen 1 (DE)

(72) Erfinder: Bauer, Walter, Heinrich- Wieland- Strasse
178, D-8000 München 83 (DE)
Erfinder: Färber, Heinrich, Dietlindenstrasse 9,
D-8000 München 40 (DE)
Erfinder: Schneider, Rudolf, Förnbachstrasse 4c,
D-8068 Pfaffenhofen/Ilm (DE)

EP 0 114 350 B1

## Description

Die Erfindung betrifft eine Vorrichtung zum Entnehmen von Filmen, insbesondere Röntgenfilmen aus einem eine Entnahmeöffnung aufweisenden, vertikal anzuordnenden Magazin, mit einer Saugeinrichtung zum Aufnehmen der im Magazin stapelförmig, im wesentlichen aufrecht nebeneinander stehenden Filme verschiedenen Formats, die mit einer Seitenkante an einem seitlichen Anschlag im Magazin anliegen, und zum Übergeben an eine Fördereinrichtung, wobei die Saugeinrichtung nur eine Breite gleich der kleinsten Formatbreite eines Filmes aufweist.

Eine Vorrichtung der eingangs genannten Art ist aus der DE-A- 31 22 585 bekannt. Das Problem bei Vorrichtungen dieser Art ist darin zu sehen, daß die Breite des größten Formats das Fünf- bis Siebenfache der Breite der Saugeinrichtung ausmachen kann. Mit "Breite der Saugeinrichtung" ist der Abstand der zwei äußersten Saugköpfe gemeint. Dies hat zur Folge, daß der Film nur an einer Seite festgehalten wird und bei der Übergabe an die Fördereinrichtung oft schräg in diese einläuft, da beispielsweise das Vakuum in der Saugeinrichtung noch nicht vollkommen abgebaut ist und die Fördereinrichtung das Blatt bereits ergriffen hat. Dabei kann das Filmblatt auf der Seite der Saugeinrichtung von dieser noch festgehalten und sein Einzug verzögert werden, wogegen auf der anderen Seite der Film verhältnismäßig ungehindert eingezogen wird, womit sich das Filmblatt schräg stellt.

Aufgabe der Erfindung ist es daher, eine Vorrichtung der eingangs genannten Art derart weiterzubilden, daß ein paralleler Filmeinzug gewährleistet ist.

Diese Aufgabe wird durch die im Anspruch 1 aufgeführten Mittel gelöst.

Mit der Erfindung wird erreicht, daß der Förderteil außerhalb des Bereichs der Saugeinrichtung so lange auf den Film keine Wirkung hat, bis die Haltekraft in der Saugeinrichtung kleiner ist als die Mitnahmekraft der Fördereinrichtung. Nach Abschalten der Saughaltekraft wirkt auf den Film keine asymmetrische Kraftgegenkomponente mehr, so daß dieser in einer achsparallelen Ausrichtung zur Förderrichtung weiter eingezogen und transportiert werden kann.

Weitere Einzelheiten und Vorteile der Erfindung ergeben sich aus den Unteransprüchen im Zusammenhang mit der Beschreibung eines Ausführungsbeispieles, das anhand von Figuren eingehend erläutert wird. Es zeigen:

Fig. 1 eine schematische Seitenansicht der erfindungsgemäßen Vorrichtung;

Fig. 2 eine Schrägansicht der erfindungsgemäßen Fördereinrichtung; und

Fig. 3 eine perspektivische Teilansicht der Fördereinrichtung mit Leitblech.

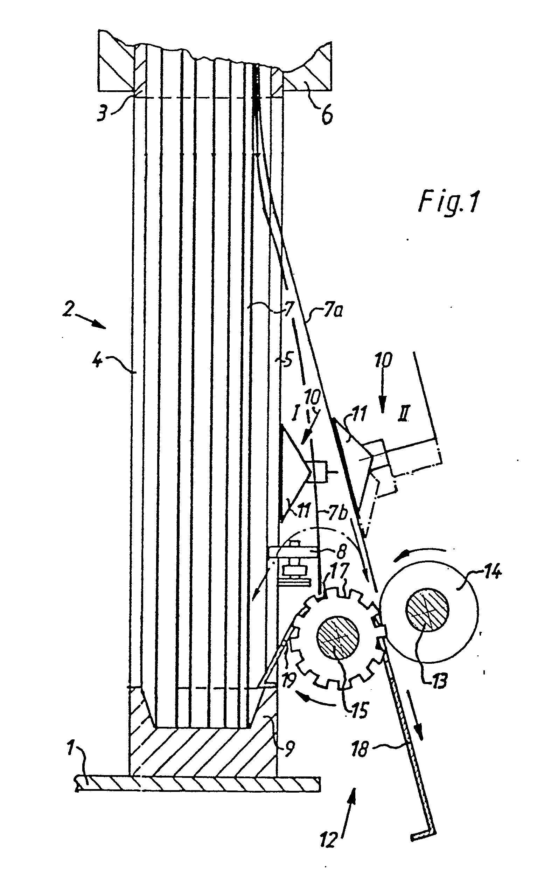

In Fig. 1 ist mit 1 ein Tisch einer Vorrichtung der eingangs genannten Art bezeichnet, auf welcher ein Magazin 2 angeordnet ist. Das Magazin 2 weist einen Behälter 3 mit sich etwa gegenüberliegenden Öffnungen 4 und 5 auf, die in den beiden Breitflächen ausgeformt sind. Die Öffnungen 4 und 5 sind mittels eines schachtelartigen Schiebers 6 lichtdicht zu verschließen. In dem Magazin 2 befindet sich ein Stapel von Filmen 7, der an der unteren Schmalseite des Magazins aufsteht. Durch nur schematisch angedeutete, in der DE-A- 31 22 585 näher beschriebene Mittel in Form einer antreibbaren Rolle 8 wird das oberste zur Ausgabeöffnung 5 weisende Filmblatt mit der in der Bildebene oben liegenden, vertikalen Seitenkante gegen einen am Magazinrahmen ausgeformten Anschlag 9 bewegt, so daß jedes Filmblatt bezüglich Bodenkante und einer Seitenkante vor seiner Ausgabe fixiert ist.

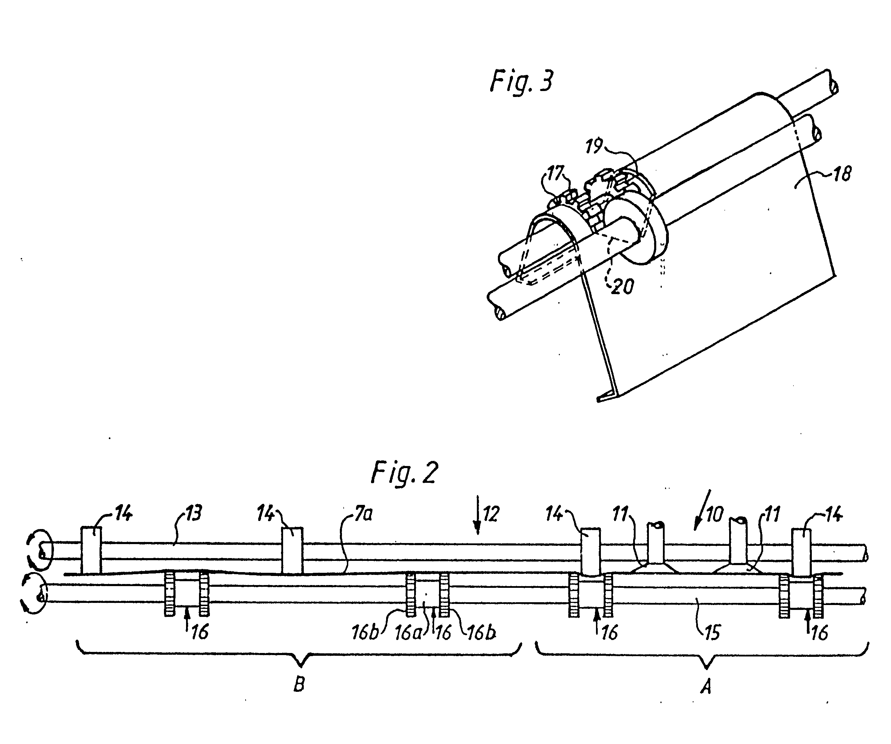

In Fig. 1 ist ferner eine Saugeinrichtung 10 schematisch angedeutet, die, wie aus Fig. 2 zu entnehmen ist, zwei Saugköpfe 11 aufweist, welche zum einen mit einem nicht dargestellten Vakuumsystem und zum anderen mit einer nicht näher beschriebenen Kulissenführung zum Zwecke der Bewegung in Verbindung stehen. In Fig. 1 ist die Saugeinrichtung in zwei Hauptstellungen gezeigt, in der Stellung I während des Aufnehmens des vorderen Blattes und in der Stellung II kurz vor der Übergabe des abgehobenen Filmblattes 7a an eine Fördereinrichtung 12. Mit gestrichelten Linien ist in der Stellung II der Saugeinrichtung 10 die unmittelbare Übergabestellung des Blattes an die Fördereinrichtung 12 dargestellt.

In Fig. 2 ist die Fördereinrichtung 12 im einzelnen beschrieben. Auf einer ersten Welle 13 sind in Abständen schmale Rollen 14 drehfest angebracht und auf einer zweiten Welle 15 sind Flanschrollen 16 drehfest angeordnet, welche einen zylindrischen Rollenkörper 16a aufweisen, an dessen beiden Stirnseiten Nutenscheiben 16b angebracht sind. Die Nutenscheiben 16b haben einen größeren Radius als der zylindrische Körper 16a. Der zylindrische Körper hat dabei eine Breite, die geringfügig größer ist als die Breite der Rollen 14 auf der Welle 13.

Im Bereich A gegenüber der Saugeinrichtung 10 sind die Rollen 14 auf der Welle 13 gegenüber den Flanschrollen 16 angeordnet, wogegen in dem Bereich B neben der Saugeinrichtung 10 die Rollen 14 auf der Welle 13 gegenüber den Flanschrollen 16 auf der Welle 15 versetzt angeordnet sind. Im übrigen sind die Abstände der Wellen 13 und 15 bzw. die Durchmesser der Rollen 14 und 16 so bemessen, daß diese gemäß Fig. 1 sich geringfügig überschneiden bzw. kämmen. Im übrigen sind in den Nutenscheiben 16b Nuten 17 ausgeformt, wie deutlich in Fig. 1 zu sehen ist.

In den Fig. 1 und 3 ist ferner ein Leitblech 18 dargestellt, das aus Gründen der Übersichtlichkeit in Fig. 2 weggelassen ist. Das Leitblech 18 führt zwischen den Wellen 13 und 15 hindurch und ist um die Welle 15 gebogen in einem Radius, der kleiner ist als der Außenumfang der Nutenscheiben 16b. Im Bereich dieser Nutenscheiben sind Ausnehmungen 19 in dem Leitblech 18 ausgebildet, welche in Transportrichtung der Rollen 14 und 16 gesehen eine V-förmige Ausbildung 20 haben.

Die Wirkungsweise der anhand der Fig. 1 bis 3 beschriebenen Vorrichtung ist nun folgendermaßen: Nach dem Einsetzen des Magazins 2, das mit Filmer 7 verschiedenen Formats gefüllt ist, auf den Vorrichtungstisch 1 wird der Schieber 6 geöffnet, so daß die Ausgabeöffnung 5 des Magazins 2 freigelegt ist. Dieses Magazin 2 dient als Speichermagazin, in welches beispielsweise aus einer Be- und Entladestation von Röntgenkassetten eine Vielzahl von belichteten Filmen eingegeben worden ist oder Filme nacheinander eingegeben werden, um diese an eine Entwicklungsmaschine zu bringen. Am Eingang einer solchen Entwicklungsmaschine kann die erfindungsgemäße Vorrichtung vorgesehen werden, mit deren Hilfe nun aus dem geöffneten Magazin die Filme herausgenommen und an die Entwicklungsmaschine übergeben werden können.

Die Saugeinrichtung 10 fährt in die mit I dargestellte Stellung, in der das Vakuum eingeschaltet wird. Durch die antreibbaren Mittel 8 ist das oberste Filmblatt an den Anschlag 9 gebracht worden, so daß den beiden Saugköpfen 11 auf jeden Fall nur ein Blatt irgendeines Formats gegenübersteht. Nach Ansaugen des obersten Blattes wird die Saugeinrichtung 10 betätigt und fährt entlang einer Kurve in die mit II dargestellte Stellung, wobei das Blatt zunächst aus dem Magazin herausgehoben, in Fig. 1 nach rechts bewegt und schließlich auf den Einführspalt der Fördereinrichtung 12 zugeführt wird, wobei das entnommende Blatt 7a je nach Format mit seinem oberen Teil noch in dem Magazin 2 stecken kann.

Die Fördereinrichtung befindet sich im Betrieb, d. h., die Rollen laufen in der angezeigten Richtung. Für sehr kleine Formate ist die Übergabe an die Fördereinrichtung 12 verhältnismäßig problemlos, indem die Vorderkante des Filmblattes zwischen die Rollen 14 und 16 des Bereichs A eingeführt wird. Selbst wenn das Format noch geringfügig in den Bereich B reicht, verläuft der Einzug im wesentlichen achsparallel.

Bei den größeren Formaten wird das Filmblatt nur im Bereich A durch die Saugeinrichtung 10 achsparallel gehalten. Der sich in den Bereich B erstreckende Teil des Filmblattes kann dabei aufgrund der Schwerkraft etwas nach unten durchhängen, wie das in Fig. 1 durch das Filmblatteil 7b gezeigt ist. Die Flanschrollen 16 haben jedoch einen solchen Abstand zueinander, daß die Nuten 17 der Nutenscheiben 16b die Führungskante des Filmblattes ergreifen und in den Einführspalt zwischen die Rollen 14 und 16 heben. Dieser Einhebevorgang wird zunächst von dem Nutenscheibenpaar 16b durchgeführt, das dem Bereich A am nächsten liegt. Aufgrund der Steifigkeit der Filme rückt aber die Führungskante des weiter im Bereich B liegenden Filmes dem nächsten Nutenscheibenpaar 16b näher, so daß auch diese von der Rolle 16 ergriffen werden kann. So folgt mit dem Hebevorgang ausgehend von dem Bereich A eine Rolle 16 nach der anderen, wobei insgesamt gesehen dieser Einhebevorgang sehr schnell von statten geht.

Durch die versetzte Anordnung der Rollen 14 und 16 im Bereich B wirkt auf das Filmblatt in diesem Bereich eine nur sehr geringe Mitnahmekraft, auf alle Fälle eine kleinere, als in dem Bereich A, in welchem die Rollen 14 zwischen die Nutenscheiben 16 eingreifen und damit eine intensivere Mitnahme auf das Blatt ausüben. Stärker als die Mitnahmekraft im Bereich A durch die Rollen 14 und 16 ist die Haltekraft der Saugeinrichtung 10. Durch die schwache Mitnahmekraft im Bereich B wird vermieden, daß das Filmblatt aufgrund des großen Hebelarmes von der Saugeinrichtung 10 abgerissen und damit schräg in die Fördereinrichtung 12 eingebracht wird. Mit der stärkeren Mitnahmekraft im Bereich A wird bewirkt, daß bei abfallendem Vakuum das Blatt unmittelbar mit exakter Führung weitertransportiert wird.

Damit bei der Führung der Film nicht an der Ausnehmung 19 in dem Leitblech 18 hängenbleiben kann, ist in Transportrichtung gesehen der V-förmige Ausbruch 20 ausgebildet.

Im Betriebsfall kann es auch vorkommen, daß beispielsweise durch statische Aufladung zwei Filme aneinander haften. Durch eine nicht dargestellte Einrichtung wird ein solches "Doppelblatt" erkannt und der Transport der Fördereinrichtung 12 gestoppt und umgekehrt. Das hat zur Folge, daß der Film wieder aus der Fördereinrichtung 12 herausfährt und von den Nutenscheiben 16b in das Magazin 2 zurückgehoben werden kann.

**Patentnasprüche**

1. Vorrichtung zum Entnehmen von Filmen, insbesondere Röntgenfilmen, aus einem eine Entnahmeöffnung aufweisenden, vertikal anzuordnenden Magazin, mit einer Saugeinrichtung zum Aufnehmen der im Magazin stapelförmig, im wesentlichen aufrecht nebeneinander stehenden Filme verschiedenen Formats, die mit einer Seitenkante an einem seitlichen Anschlag im Magazin anliegen, und zum Übergeben an eine Fördereinrichtung, wobei die Saugeinrichtung nur eine Breite gleich der kleinsten Formatbreite eines Filmes aufweist, dadurch gekennzeichnet, daß die Mitnahmekraft der Fördereinrichtung (12) im Bereich (A) der Saugeinrichtung (10) kleiner ist als die der Saugeinrichtung (10) und die Mitnahmekraft der Fördereinrichtung im übrigen Bereich (B) kleiner ist als die der Fördereinrichtung im Bereich (A) der Saugeinrichtung (10).

2. Vorrichtung nach Anspruch 1, dadurch gekennzeichnet, daß die Fördereinrichtung (12) zwei Wellen (13, 15) aufweist, auf welchen einzelne Rollen (14, 16) versetzt oder einander gegenüberliegend fest angeordnet sind.

3. Vorrichtung nach Anspruch 2, dadurch gekennzeichnet, daß die Rollen in dem Bereich (B) geringerer Mitnahmekraft versetzt und in dem Bereich (A) größerer Mitnahmekraft einander gegenüberliegend angeordnet sind.

4. Vorrichtung nach Anspruch 2 oder 3, dadurch gekennzeichnet, daß die Rollen auf der dem Magazin (2) näherliegenden Welle (15) durch einen zylindrischen Körper (16a) mit an den Stirnseiten angebrachten Scheiben (16b) größeren Durchmessers gebildet sind.

5. Vorrichtung nach Anspruch 4, dadurch gekennzeichnet, daß in den Scheiben (16b) Nuten (17) ausgeformt sind.

6. Vorrichtung nach Anspruch 4 oder 5, dadurch gekennzeichnet, daß die Breite des zylindrischen Körpers (16a) größer ist, als die Breite der Rollen (14) auf der anderen Welle (13).

7. Vorrichtung nach einem der Ansprüche 2 bis 6, dadurch gekennzeichnet, daß die Abstände der Wellen (13, 15) bzw. die Durchmesser der Rollen (14, 16) so gewählt sind, daß die Rollen geringfügig mit einander kämmen.

8. Vorrichtung nach einem der Ansprüche 4 bis 7, gekennzeichnet durch ein gebogenes Leitblech (18), das zwischen den Wellen (13, 15) durchgeführt ist, die dem Magazin (2) nähergelegene Welle (15) umgibt und im Bereich der Rollen (16) Aussparungen (19) aufweist, durch welche die Scheiben (16b) hervorragen.

9. Vorrichtung nach Anspruch 8, dadurch gekennzeichnet, daß die Aussparungen (19) des Leitblechs (18) in Transportrichtung des Filmes (7a) gesehen in einen V-förmigen Ausbruch (20) übergehen.

10. Vorrichtung nach einem der Ansprüche 1 bis 9, dadurch gekennzeichnet, daß die Antriebsrichtung der Fördereinrichtung (12) umkehrbar ist.


## Claims

1. Apparatus for removing films, in particular X-ray films, from a film holder which has an opening for the removal and should be arranged in a vertical position, which apparatus has a suction device for picking up the differently sized films which stand stacked next to each other in the film holder in an essentially vertical manner, one side edge of each of said films resting against a lateral stop in the film holder, and for transferring the films to a conveying device, the suction device being only of a width equal to the smallest film size width, characterised in that the entraining force of the conveying device (12) in the region (A) of the suction device (10) is smaller than that of the suction device (10) and the entraining force of the conveying device in the remaining region (B) is smaller than that of the conveying device in the region (A) of the suction device (10).

2. Apparatus according to Claim 1, characterised in that the conveying device (12) has two shafts (13, 15) along which individual rollers (14, 16) are fixedly arranged in a staggered manner or opposite each other.

3. Apparatus according to Claim 2, characterised in that the rollers are arranged in a staggered manner in the region (B) of the lower entraining force and opposite each other in the region (A) of the higher entraining force.

4. Apparatus according to Claim 2 or 3, characterised in that the rollers on the shaft (15) situated more closely to the film holder (2) are formed by a cylindrical body (16a) with discs (16b) of a larger diameter attached to the end faces.

5. Apparatus according to Claim 4, characterised in that notches (17) are formed in the discs (16b).

6. Apparatus according to Claim 4 or 5, characterised in that the with of the cylindrical body (16a) is greater than the width of the rollers (14) on the other shaft (13).

7. Apparatus according to one of Claims 2 to 6, characterised in that the distances between the shafts (13, 15) or the diameters of the rollers (14, 16) are such that the rollers interlock slightly.

8. Apparatus according to one of Claims 4 to 7, characterised by a curved guide plate (18) which passes between the shafts (13, 15), surrounds the shaft (15) situated more closely to the film holder (2) and has openings (19) in the region of the rollers (16), through which the discs (16b) protrude.

9. Apparatus according to Claim 8, characterised in that the openings (19) in the guide plate (18) verge into a V-shaped cutout (20), viewed in the direction of travel of the film (7a).

10. Apparatus according to one of claims 1 to 9, characterised in that the direction of drive of the conveying device (12) can be reversed.


## Revendications

1. Appareil pour enlever des films d'un magasin à disposer verticalement et présentant une ouverture d'enlèvement, en particulier des radiographies, comprenant un dispositif d'aspiration pour saisir les films, lesquels sont placés essentiellement en position verticale les uns a côté des autres en une pile, ont des formats différents et s'appliquent par un bord latéral contre une butée latérale dans le magasin, et pour les transférer à un dispositif de transport, le dispositif d'aspiration ayant seulement la largeur du format de film avec la plus petite largeur, caracrérisé en ce que le dispositif de transport (12) possède dans sa zone (A) correspondant à dispositif d'aspiration (10) une force qui est plus petite que la force d'entraînement du dispositif d'aspiration (10) et plus grande que sa force d'entraînement dans la zone restante (B).

2. Appareil selon la revendication 1, caractérisé en ce que le dispositif de transport (12) comporte deux arbres (13, 15) sur lesquels des galets (14, 16) sont calés les uns en face des autres ou avec un décalage mutuel.

3. Appareil selon la revendication 2, caractérisé en ce que les galets dans la zone (B) à plus faible force d'entraînement sont mutuellement décalés et sont disposés les uns en face des autres dans la zone (A) de plus grande force d'entraînement.

4. Appareil selon la revendication 2 ou 3, caractérisé en ce que les galets sur l'arbre (15) situé plus près du magasin (2) sont formés par un corps cylindrique (16a) et des parties discoïdes (16b) de plus grand diamètre sur les extrémités du corps cylindrique.

5. Appareil selon la revendication 4, caractérisé en ce que des crans (17) sont formés dans les bords des parties discoïdes (16b).

6. Appareil selon la revendication 4 ou 5, caractérisé en ce que le corps cylindrique (16a) possède une plus grande largeur que les galets (14) sur l'autre arbre (13).

7. Appareil selon l'une des revendications 2 à 6, caractérisé en ce que l'espacement des arbres (13, 15) et les diamètres des galets (14, 16) sont choisis de manière que les galets s'interpénètrent légèrement.

8. Appareil selon l'une des revendications 4 à 7, caractérisé par un déflecteur courbe (18) qui passe entre les arbres (13, 15), entoure l'arbre (15) situé plus près du magasin (2) et présente dans la région des galets (16) des découpes (19) à travers lesquelles font saillie les parties discoîdes (16b).

9. Appareil selon la revendication 8, caractérisé en ce que les découpes (19) du déflecteur (18) se terminent dans la direction de transport du film (7a) par une échancrure (20) en V.

10. Appareil selon l'une des revendications 1 à 9, caractérisé en ce que le sens d'entraînement du dispositif de transport (12) est réversible.

Fig.1

Fig. 3

Fig. 2

0 114 350